(19) 

Europäisches
Patentamt
European
Patent Office
Office européen
des brevets

(11) **EP 4 542 299 A1**

(12) **EUROPEAN PATENT APPLICATION**

(43) Date of publication:
**23.04.2025  Bulletin 2025/17**

(21) Application number: **24191769.9**

(22) Date of filing: **30.07.2024**

(51) International Patent Classification (IPC):
**G03B 17/12** $^{(2021.01)}$    **G02B 7/02** $^{(2021.01)}$
**G03B 30/00** $^{(2021.01)}$

(52) Cooperative Patent Classification (CPC):
**G03B 17/12; G02B 7/021; G02B 7/028;
G03B 30/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.10.2023  KR 20230140732**

(71) Applicant: **Samsung Electro-Mechanics Co., Ltd.
Gyeonggi-do (KR)**

(72) Inventor: **Lee, Eun Chong
Suwon-si, Gyeonggi-do (KR)**

(74) Representative: **Grünecker Patent- und
Rechtsanwälte
PartG mbB
Leopoldstraße 4
80802 München (DE)**

(54) **LENS ASSEMBLY**

(57) A lens assembly includes a first lens barrel; a second lens barrel disposed in front of the first lens barrel while surrounding at least a portion of the first lens barrel; and a first lens disposed in front of the second lens barrel in contact with a portion of the second lens barrel, wherein a thermal conductance of the second lens barrel is higher than a thermal conductance of the first lens barrel.

FIG. 2

EP 4 542 299 A1

**Description**

CROSS-REFERENCE TO RELATED APPLICATIONS

This application claims benefit of priority to Korean Patent Application No. 10-2023-0140732 filed on October 19, 2023, in the Korean Intellectual Property Office, the entire disclosure of which is incorporated herein by reference for all purposes.

BACKGROUND

1. Field

The present disclosure relates to a lens assembly applied to a camera module.

2. Description of Related Art

Recently, a means of transportation such as a car is being equipped with multiple cameras, including not only a rear-view camera but also surround view monitoring (SVM) cameras, advanced driver assistance system (ADAS) cameras, and other types of cameras. In particular, the number of cameras mounted on an exterior of a vehicle is increasing.

A means of transportation may be operated in a variety of environments, and may be operated in environments in which temperature and humidity change rapidly. In particular, when the means of transportation encounters a low-temperature environment in a hightemperature and high-humidity environment, condensation may occur on surfaces of parts mounted on the means of transportation.

In the case of a camera module mounted on the exterior of a means of transportation, condensation is likely to occur inside the camera module due to rapid temperature changes. In particular, in the case of a lens disposed at the outermost (forwardmost) of the camera module, an object-side surface thereof is directly exposed to an external environment, so condensation is likely to occur on an image-side surface thereof disposed inside the camera module. Since the performance of the camera module may deteriorate due to the condensation, a lens assembly that can prevent condensation is desirable.

SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

In one general aspect, a lens assembly includes a first lens barrel; a second lens barrel disposed in front of the first lens barrel while surrounding at least a portion of the first lens barrel; and a first lens disposed in front of the second lens barrel in contact with a portion of the second lens barrel, wherein a thermal conductance of the second lens barrel is higher than a thermal conductance of the first lens barrel.

The first lens assembly may be made of a synthetic resin, and the second lens barrel may be made of metal.

The second lens barrel may include a gap maintaining portion and a body portion, the first lens may be disposed in front of the gap maintaining portion, and a portion of the first lens barrel may be disposed inside the body portion.

The gap maintaining portion may include a hole extending in an optical axis direction and forming an inner peripheral surface of the gap maintaining portion, and a plurality of grooves may be formed in the inner peripheral surface of the gap maintaining portion and may extend in a circumferential direction of the inner peripheral surface.

The gap maintaining portion may include a hole extending in an optical axis direction and forming an inner peripheral surface of the gap maintaining portion, and a plurality of grooves may be formed in the inner peripheral surface of the gap maintaining portion and may extend in the optical axis direction.

When viewed from a front of the second lens barrel, the plurality of grooves may form a wave shape along the inner peripheral surface of the gap maintaining portion.

When viewed from a front of the second lens barrel, the plurality of grooves may form a sawtooth shape along the inner peripheral surface of the gap maintaining portion.

A thermal conductance of the second lens barrel may be higher than a thermal conductance of the first lens.

The lens assembly may further may include a cap supporting the first lens, and the cap may be made of a same material as the second lens barrel.

A seating groove may be formed in a circumferential direction of the second lens barrel in a front surface of the second lens barrel, the seating groove may overlap the first lens in an optical axis direction, and the lens assembly may further may include a sealing member disposed in the seating groove.

In another general aspect, a lens assembly includes a first lens barrel; a second lens barrel disposed in front of the first lens barrel while surrounding at least a portion of the first lens barrel; and a first lens disposed in front of the second lens barrel, wherein the second lens barrel includes a gap maintaining portion contacting the first lens and separating the first lens from the first lens barrel, and a thermal conductance of the gap maintaining portion is higher than a thermal conductance of the first lens.

A plurality of grooves that may be concave in a direction perpendicular to an optical axis direction may be formed in a surface of the gap maintaining portion.

The gap maintaining portion may include a hole extending in an optical axis direction and forming an inner peripheral surface of the gap maintaining portion, and the plurality of grooves may be formed along the inner peripheral surface of the gap maintaining portion.

The plurality of grooves may be disposed side by side in the optical axis direction.

The gap maintaining portion may include a hole extending in an optical axis direction and forming an inner peripheral surface of the gap maintaining portion, a longitudinal direction of the plurality of grooves may be parallel to the optical axis direction, and the plurality of grooves may be formed along the inner peripheral surface of the gap maintaining portion.

Other features and aspects will be apparent from the following detailed description, the drawings, and the claims.

BRIEF DESCRIPTION OF DRAWINGS

FIG. 1 is a perspective view of a lens assembly according to an embodiment of the present disclosure.

FIG. 2 is a cross-sectional view of the lens assembly of FIG. 1.

FIG. 3 is a cutaway perspective view of a second lens barrel of FIG. 2.

FIG. 4 is a cross-sectional view of the second lens barrel of FIG 3.

FIG. 5 is a cutaway perspective view of a second lens barrel according to another embodiment of the present disclosure.

FIG. 6 is a plan view of the second lens barrel of FIG. 5.

FIG. 7 is a cutaway perspective view of a second lens barrel according to another embodiment of the present disclosure.

FIG. 8 is a plan view of the second lens barrel of FIG. 7.

FIG. 9 is a cross-sectional view of a lens assembly according to another embodiment of the present disclosure.

FIG. 10 is a cross-sectional view of a lens assembly according to another embodiment of the present disclosure.

FIG. 11 is a diagram for illustrating a thermal conductance relationship between a first lens and a gap maintaining portion.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the

**EP 4 542 299 A1**

many possible ways of implementing the methods, apparatuses, and/or systems described herein that will be apparent after an understanding of the disclosure of this application.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

As used herein, the term "and/or" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer or section without departing from the teachings of the examples.

Spatially relative terms such as "above," "upper," "below," and "lower" may be used herein for ease of description to describe one element's relationship to another element as shown in the figures. Such spatially relative terms are intended to encompass different orientations of the device in use or operation in addition to the orientation depicted in the figures. For example, if the device in the figures is turned over, an element described as being "above" or "upper" relative to another element will then be "below" or "lower" relative to the other element. Thus, the term "above" encompasses both the above and below orientations depending on the spatial orientation of the device. The device may also be oriented in other ways (for example, rotated by 90 degrees or at other orientations), and the spatially relative terms used herein are to be interpreted accordingly.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

For explanation purposes, an object side may be referred to as a front, and an image side may be referred to as a rear. In addition, a direction away from an optical axis in a direction perpendicular to the optical axis may be referred to as the outside, and a direction toward an optical axis in the direction perpendicular to the optical axis may be referred to as the inside.

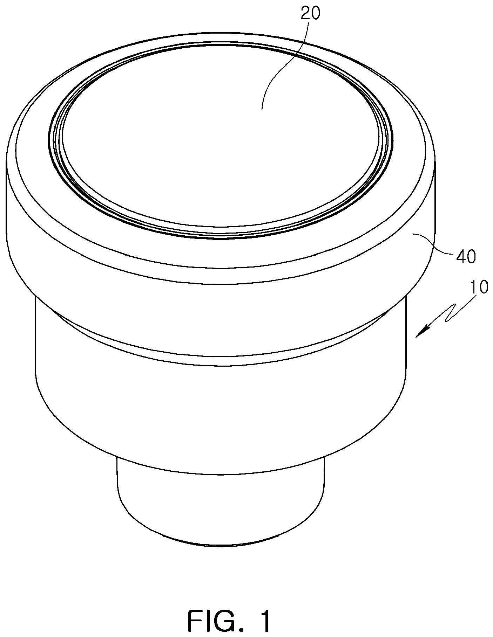

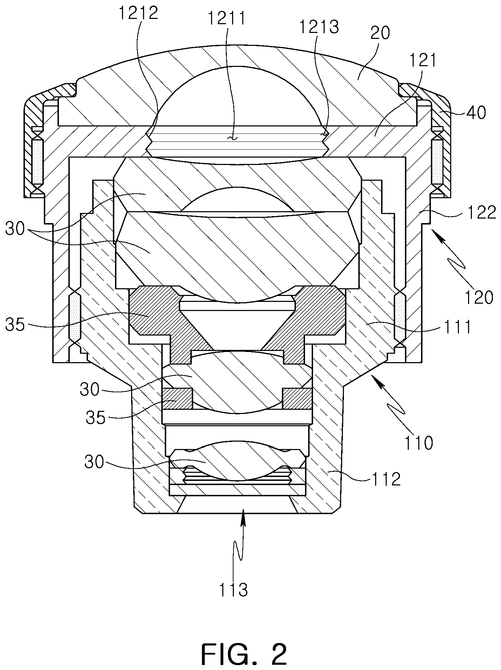

FIG. 1 is a perspective view of a lens assembly according to an embodiment of the present disclosure, and FIG. 2 is a cross-sectional view of the lens assembly of FIG. 1.

Referring to FIGS. 1 and 2, a bonding structure of the lens assembly according to an embodiment of the present disclosure will be described,

The lens assembly may include a lens barrel 10, a first lens 20, a lens group 30, and a cap 40.

The lens barrel 10 may have a cylindrical shape. A radius of the lens barrel 10 may vary in an optical axis direction. That is, the lens barrel 10 may not have a constant radius and may have a varying shape in the optical axis direction.

The lens barrel 10 may include a first lens barrel 110 and a second lens barrel 120. The first lens barrel 110 may be disposed rearward as compared to the second lens barrel 120, referring to FIG. 2.

The first lens barrel 110 may be disposed closer to the image side than the second lens barrel 120. A radius of the first lens barrel 110 may become narrower from the front to the rear. The first lens barrel 110 may include a first body 111 and a second body 112. The first body 111 may be disposed relatively forward with respect to the second body 112. The radius of the first body 111 may be greater than the radius of the second body 112.

The first lens barrel 110 may include a through-hole 113. The through-hole 113 may be a hole penetrating the first lens barrel along an optical axis. A lens group 30 may be disposed in the through-hole 113 of the first lens barrel 110. Spacers 35 may be disposed in the through-hole 113 of the first lens barrel 110. The number of lenses of the lens group 30 and the number of spacers 35 disposed in the through-hole 113 of the first lens barrel 110 may vary.

The second lens barrel 120 may include a gap maintaining portion 121 and a body portion 122. When viewed from the front of the second lens barrel 120, the gap maintaining portion 121 may be bonded to the body portion 122. The gap maintaining portion 121 may be formed integrally with the body portion 122. The gap maintaining portion 121 may be formed to protrude from an inner surface of the body portion 122 toward the optical axis. Accordingly, an inner diameter of the gap maintaining portion 121 may be smaller than an inner diameter of the body portion 122.

The first lens 20 may be disposed on one side of the gap maintaining portion 121, and a first lens barrel 110 may be disposed on the other side of the gap maintaining portion 121. In this case, a portion of the lens group 30 disposed in the first lens barrel 110 may contact the other side of the gap maintaining portion 121.

The first lens 20 may be placed at the forwardmost of the lens assembly. The first lens 20 may be disposed on one

4

side of the second lens barrel 120. The first lens 20 may be disposed in contact with one side surface of the gap maintaining portion 121 of the second lens barrel 120. A cross-section parallel to the optical axis of the first lens 20 may have an arch shape as shown in FIG. 2. An image-side surface of the first lens 20 may be spaced apart from an object-side surface of the forwardmost lens among the lenses of the lens group 30 disposed in the first lens barrel 110.

The cap 40 may support the first lens 20 so that the first lens 20 is fixed to the second lens barrel 120. The cap 40 may be disposed along an outer peripheral surface of the first lens 20. A portion of the cap 40 may overlap a portion of the first lens 20 in a direction perpendicular to an optical axis. Another portion of the cap 40 may overlap a portion of the second lens barrel 120 in a direction perpendicular to the optical axis. The cap 40 and the second lens barrel 120 may be made of a same material.

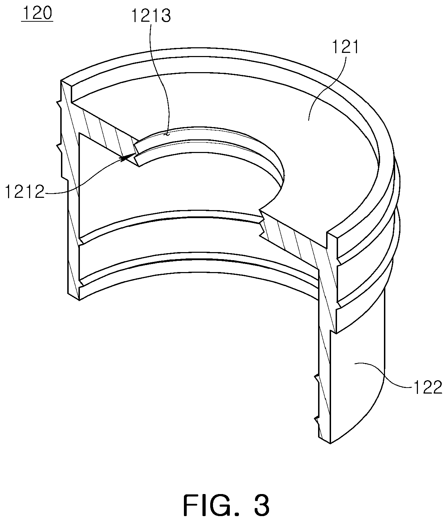

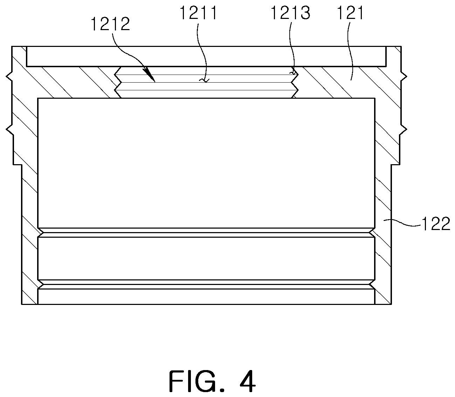

FIG. 3 is a cutaway perspective view of a second lens barrel of FIG. 2, and FIG. 4 is a cross-sectional view of the second lens barrel of FIG. 3.

Referring to FIGS. 3 and 4, a structure of the second lens barrel 120 of FIG. 2 will be described.

As described above, the second lens barrel 120 may include a body portion 122 and a gap maintaining portion 121. The gap maintaining portion 121 may include a hole 1211. The gap maintaining portion 121 may have a thickness. When viewed from the front of the second lens barrel 120, the hole 1211 of the gap maintaining portion 121 may be circular. The gap maintaining portion 121 may have a thickness in an optical axis direction. A width of the inner peripheral surface of the gap maintaining portion 121 in the optical axis direction may be equal to a thickness of the gap maintaining portion 121.

A groove 1213 may be formed in an inner peripheral surface 1212 of the gap maintaining portion 121. The groove 1213 may be a groove formed to be concave from the inner peripheral surface 1212 of the gap maintaining portion 121 toward the outside of the second lens barrel 120. The groove 1213 may be formed to extend along the inner peripheral surface 1212 of the gap maintaining portion 121. For example, the groove 1213 may be formed in the circumferential direction on the inner peripheral surface of the gap maintaining portion 121. A plurality of grooves 1213 may be formed as shown in FIGS. 3 and 4. The plurality of grooves 1213 may be disposed side by side in the optical axis direction.

An area of the inner peripheral surface 1212 of the gap maintaining portion 121 may be increased by the groove 1213 of the inner peripheral surface 1212 of the gap maintaining portion 121. Specifically, when the groove is formed in the inner peripheral surface 1212 of the gap maintaining portion 121, a surface area of the inner peripheral surface 1212 of the gap maintaining portion 121 may be increased, as compared to when the gap maintaining portion 121 does not include the groove 1213.

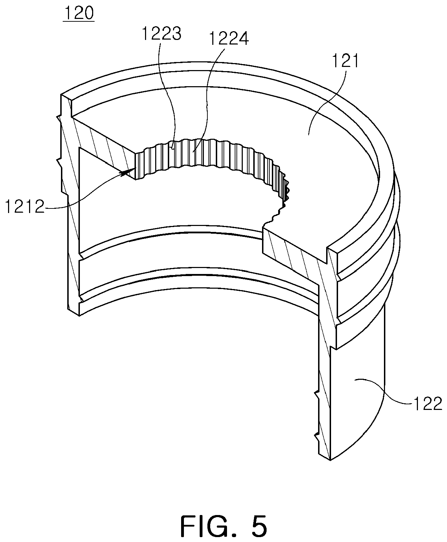

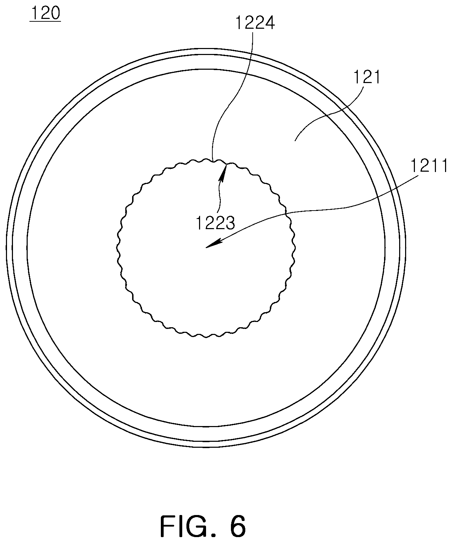

FIG. 5 is a cutaway perspective view of a second lens barrel according to another embodiment of the present disclosure, and FIG. 6 is a plan view of the second lens barrel of FIG. 5.

Referring to FIGS. 5 and 6, a second lens barrel 120 according to another embodiment of the present disclosure will be described.

As described above, the second lens barrel 120 may include a body portion 122 and a gap maintaining portion 121. The gap maintaining portion 121 may include a hole 1211. The gap maintaining portion 121 may have a thickness. When viewed from the front of the second lens barrel 120, the hole 1211 of the gap maintaining portion 121 may be circular. The gap maintaining portion 121 may have a thickness in an optical axis direction. A width of an inner peripheral surface 1212 of the gap maintaining portion 121 in the optical axis direction may be equal to a thickness of the gap maintaining portion 121.

A groove 1223 may be formed in the inner peripheral surface 1212 of the gap maintaining portion 121. The groove 1223 may be a groove formed to be concave from the inner peripheral surface 1212 of the gap maintaining portion 121 toward the outside of the second lens barrel 120. The groove 1223 may be formed in the inner peripheral surface 1212 of the gap maintaining portion 121 in a direction parallel to the optical axis. A plurality of grooves 1223 may be formed as shown in FIGS. 5 and 6. The plurality of grooves 1223 may be disposed in a circumferential direction of the second lens barrel 120. When viewed from the front of the second lens barrel 120, the inner peripheral surface 1212 of the gap maintaining portion 121 may have a wave shape. That is, when viewed from the front of the second lens barrel 120, each groove 1223 is a groove including a curved shape, and a curved protruding portion 1224 may be disposed between each groove.

An area of the inner peripheral surface 1212 of the gap maintaining portion 121 may be increased by the groove 1223 of the inner peripheral surface 1212 of the gap maintaining portion 121. Specifically, when the groove 1223 is formed in the inner peripheral surface 1212 of the gap maintaining portion 121, a surface area of the inner peripheral surface of the gap maintaining portion 121 may be increased, as compared to when the gap maintaining portion 121 does not include the groove 1223.

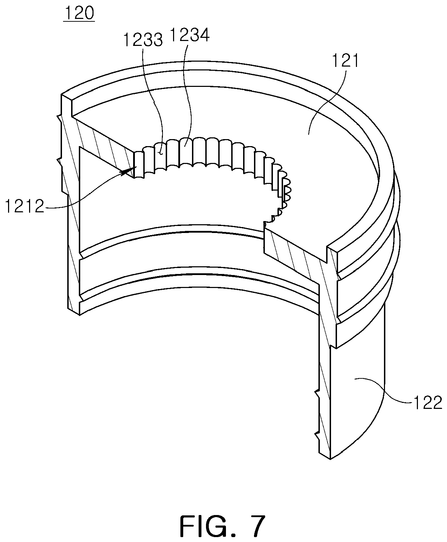

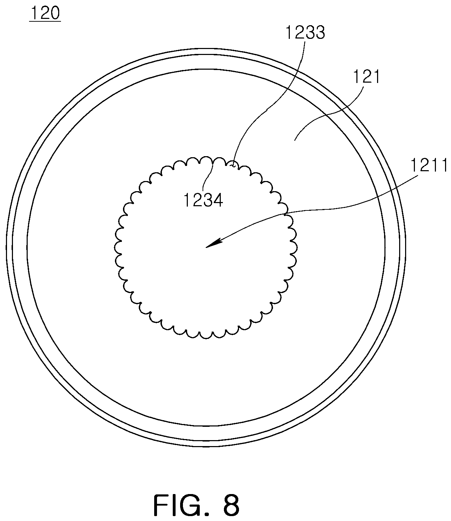

FIG. 7 is a cutaway perspective view of a second lens barrel according to another embodiment of the present disclosure, and FIG. 8 is a plan view of the second lens barrel of FIG. 7.

Referring to FIGS. 7 and 8, a second lens barrel 120 according to another embodiment of the present disclosure will be described.

As described above, the second lens barrel 120 may include a body portion 122 and a gap maintaining portion 121. The gap maintaining portion 121 may include a hole 1211. The gap maintaining portion 121 may have a thickness.

When viewed from the front of the second lens barrel 120, the hole 1211 of the gap maintaining portion 121 may be circular. The gap maintaining portion 121 may have a thickness in an optical axis direction. A width of the inner peripheral surface 1212 of the gap maintaining portion 121 in the optical axis direction may be equal to the thickness of the gap maintaining portion 121.

A groove 1233 may be formed in the inner peripheral surface 1212 of the gap maintaining portion 121. The groove 1233 may be a groove formed to be concave from the inner peripheral surface 1212 of the gap maintaining portion 121 toward the outside of the second lens barrel 120. The groove 1233 may be formed in the inner peripheral surface 1212 of the gap maintaining portion 121 in a direction parallel to the optical axis. A plurality of grooves 1233 may be formed as shown in FIGS. 7 and 8. The plurality of grooves 1233 may be disposed in the circumferential direction of the second lens barrel 120. When viewed from the front of the second lens barrel 120, the inner peripheral surface 1212 of the gap maintaining portion 121 may have a sawtooth shape. That is, when viewed from the front of the second lens barrel 120, each groove 1233 may be a groove including a curved shape, and a protruding portion 1234 with a sharp end may be disposed between each groove 1233.

An area of the inner peripheral surface 1212 of the gap maintaining portion 121 may be increased by the groove 1233 of the inner peripheral surface 1212 of the gap maintaining portion 121. Specifically, when the groove 1233 is formed in the inner peripheral surface 1212 of the gap maintaining portion 121, a surface area of the inner peripheral surface of the gap maintaining portion 121 may be increased, as compared to when the gap maintaining portion 121 does not include the groove 1233.

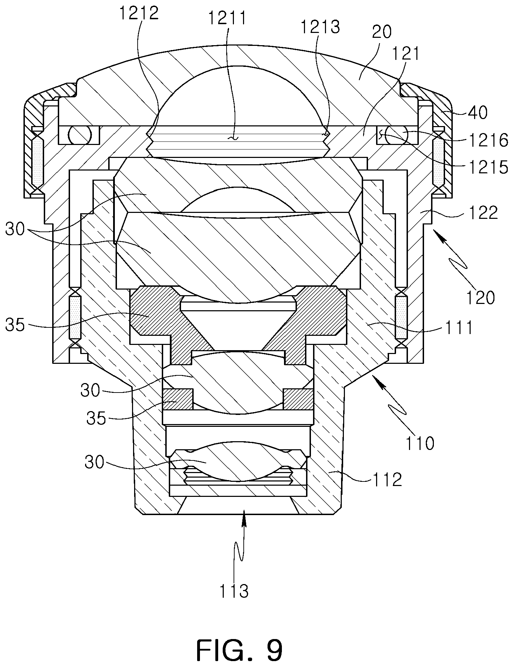

FIG. 9 is a cross-sectional view of a lens assembly according to another embodiment of the present disclosure.

Referring to FIG. 9, another embodiment of the lens assembly will be described. Hereinafter, descriptions of components overlapping with the components described above may be omitted.

The second lens barrel 120 may include a seating groove 1215. The seating groove 1215 may be formed in one side of the second lens barrel 120. In this case, a first lens barrel 110 may be disposed on the other side of the second lens barrel 120.

The seating groove 1215 may be formed in a circumferential direction of the second lens barrel 120. With respect to an optical axis, the seating groove 1215 may be disposed further outside than the gap maintaining portion 121. That is, a gap maintaining portion 121 may be disposed between the seating groove 1215 and the optical axis.

The seating groove 1215 may overlap a portion of the first lens 20 in the optical axis direction. A space formed by the seating groove 1215 may be disposed between the first lens 20 and the second lens barrel 120.

A sealing member 1216 may be disposed in the seating groove 1215. The sealing member 1216 may be an O-ring. The sealing member 1216 may contact a portion of an inner surface of the seating groove 1215. In addition, the sealing member 1216 may contact a portion of a rear surface of the first lens 20.

The cap 40 may support the first lens 20 so that the first lens 20 is bonded to the second lens barrel 120. Since the cap 40 supports the first lens 20 and the sealing member 1216 is disposed between the first lens 20 and the second lens barrel 120, the first lens 20 may be prevented from rotating through friction between the sealing member 1216 and the first lens 20. In addition, the sealing member 1216 may prevent dust or moisture from entering the inside of the second lens barrel 120.

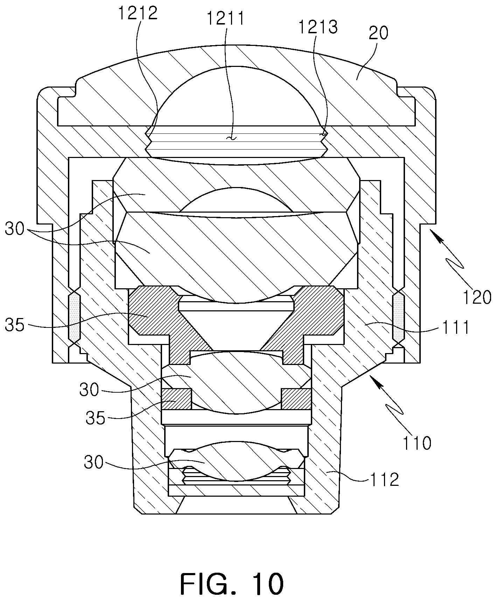

FIG. 10 is a cross-sectional view of a lens assembly according to another embodiment of the present disclosure.

Referring to FIG. 10, another embodiment of the lens assembly will be described. Hereinafter, descriptions of components overlapping with the components described above may be omitted.

A first lens 20 may be disposed in front of a second lens barrel 120. A groove 50 may be formed in the front of the second lens barrel 120 in a circumferential direction of the second lens barrel 120, and the first lens 20 may be insertedly bonded to the groove 50 formed in the front of the second lens barrel 120. That is, an outer peripheral surface of the first lens 20 may be disposed in contact with an inner peripheral surface of the groove 50 formed in the front of the second lens barrel 120. According to the present embodiment, the first lens 20 may be insertedly bonded to the groove 50 formed in the front of the second lens barrel 120, so the cap 40 shown in FIGS. 2 and 9 for bonding the first lens 20 can be omitted.

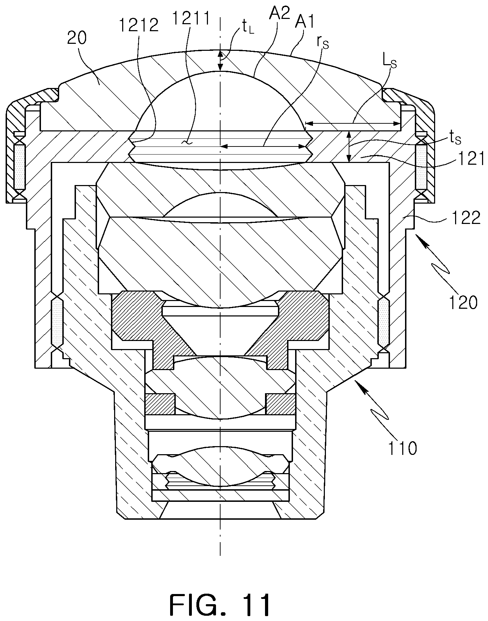

FIG. 11 is a diagram for illustrating a thermal conductance relationship between a lens and a lens barrel.

Referring to FIG. 11 and a structure of the lens assembly described above, material characteristics of components included in the lens assembly and resulting effects will be described.

A first lens barrel 110 and a lens group 30 disposed in the first lens barrel 110 may be made of a synthetic resin. In this case, the materials of the first lens barrel 110 and the lens group 30 may not be the same.

The second lens barrel 120 may be made of a material having a greater thermal conductivity than the first lens barrel 110. For example, the second lens barrel 120 may be made of metal. The metal of which the second lens barrel 120 is made may be an alloy, and may be selected in consideration of durability, corrosion resistance, and other considerations.

The first lens 20 disposed in front of the second lens barrel 120 may be made of a synthetic resin or glass.

Since the materials of the first lens barrel 110 and the second lens barrel 120 are different, the thermal conductivity of the first lens barrel 110 and the thermal conductivity of the second lens barrel 120 are different. In this case, it is preferable that the thermal conductivity of the second lens barrel 120 is greater than the thermal conductivity of the first lens barrel 110.

In addition, since the materials of the second lens barrel 120 and the first lens 20 are different, there is a difference between the thermal conductivity of the second lens barrel 120 and the thermal conductivity of the first lens 20. In this case, it is preferable that the thermal conductivity of the second lens barrel 120 is greater than the thermal conductivity of the first lens barrel 110.

In order to prevent condensation from occurring on an image-side surface of the first lens 20 when there is a sudden change from a high temperature and high humidity environment to a low temperature environment, the thermal conductivity of the gap maintaining portion 121 may be set to be higher than the thermal conductivity of the first lens 20. Specifically, when the temperature of the gap maintaining portion 121 is lowered to a dew point temperature before the temperature of the first lens 20 is lowered to the dew point temperature due to the high thermal conductivity of the gap maintaining portion 121, condensation may occur on the inner peripheral surface 1212 of the gap maintaining portion 121 before condensation occurs on the image-side surface of the first lens 20. In this case, since condensation first occurs on the inner peripheral surface 1212 of the gap maintaining portion 121, condensation on the image-side surface of the first lens 20 can be prevented or reduced.

The thermal conductivity of the gap maintaining portion 121 can be determined to be higher than the thermal conductivity of the first lens 20 through the relationship of Equations 1 to 3 below.

$$C_L < C_s \tag{1}$$

$$C_L = k_L \times \frac{A_1 + A_2}{2 \times t_L} \tag{2}$$

$$C_S = k_s \times \left(1 + 2 \times \frac{r_s}{L_s}\right) \times t_s \tag{3}$$

In Equations (1) to (3) above, $C_L$ is a thermal conductance of the first lens 20, Cs is a thermal conductance of the gap maintaining portion 121, $k_L$ is a thermal conductivity of the first lens 20, $k_s$ is a thermal conductivity of the gap maintaining portion 121, $A_1$ is an area of an object-side surface of the first lens 20, $A_2$ is an area of an image-side surface of the first lens 20, $t_L$ is a thickness of a center of the first lens 20, $t_s$ is a thickness of the gap maintaining portion 121, and $r_s$ is a radius of the hole 1211 of the gap maintaining portion.

As set forth above, a lens assembly of a camera module according to the present disclosure prevents condensation from occurring in the lens assembly, and prevents degradation of the performance of the camera module.

While this disclosure includes specific examples, it will be apparent after an understanding of the disclosure of this application that various changes in form and details may be made in these examples without departing from the spirit and scope of the claims and their equivalents. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**Claims**

1. A lens assembly comprising:

   a first lens barrel;
   a second lens barrel disposed in front of the first lens barrel while surrounding at least a portion of the first lens barrel; and
   a first lens disposed in front of the second lens barrel in contact with a portion of the second lens barrel,
   wherein a thermal conductance of the second lens barrel is higher than a thermal conductance of the first lens barrel.

2. The lens assembly of claim 1, wherein the first lens assembly is made of a synthetic resin, and the second lens barrel is made of metal.

3. The lens assembly of claim 1, wherein the second lens barrel comprises a gap maintaining portion and a body portion,

   the first lens is disposed in front of the gap maintaining portion, and
   a portion of the first lens barrel is disposed inside the body portion.

4. The lens assembly of claim 3, wherein the gap maintaining portion comprises a hole extending in an optical axis direction and forming an inner peripheral surface of the gap maintaining portion, and
   a plurality of grooves are formed in the inner peripheral surface of the gap maintaining portion and extend in a circumferential direction of the inner peripheral surface.

5. The lens assembly of claim 3, wherein the gap maintaining portion comprises a hole extending in an optical axis direction and forming an inner peripheral surface of the gap maintaining portion, and
   a plurality of grooves are formed in the inner peripheral surface of the gap maintaining portion and extend in the optical axis direction.

6. The lens assembly of claim 5, wherein, when viewed from a front of the second lens barrel, the plurality of grooves form a wave shape along the inner peripheral surface of the gap maintaining portion.

7. The lens assembly of claim 5, wherein, when viewed from a front of the second lens barrel, the plurality of grooves form a sawtooth shape along the inner peripheral surface of the gap maintaining portion.

8. The lens assembly of claim 1, wherein a thermal conductance of the second lens barrel is higher than a thermal conductance of the first lens.

9. The lens assembly of claim 1, wherein the lens assembly further comprises a cap supporting the first lens, and the cap is made of a same material as the second lens barrel.

10. The lens assembly of claim 1, wherein a seating groove is formed in a circumferential direction of the second lens barrel in a front surface of the second lens barrel,

    the seating groove overlaps the first lens in an optical axis direction, and
    the lens assembly further comprises a sealing member disposed in the seating groove.

11. A lens assembly comprising:

    a first lens barrel;
    a second lens barrel disposed in front of the first lens barrel while surrounding at least a portion of the first lens barrel; and
    a first lens disposed in front of the second lens barrel,
    wherein the second lens barrel comprises a gap maintaining portion contacting the first lens and separating the first lens from the first lens barrel, and
    a thermal conductance of the gap maintaining portion is higher than a thermal conductance of the first lens.

12. The lens assembly of claim 11, wherein a plurality of grooves that are concave in a direction perpendicular to an optical axis direction are formed in a surface of the gap maintaining portion.

13. The lens assembly of claim 12, wherein the gap maintaining portion comprises a hole extending in an optical axis direction and forming an inner peripheral surface of the gap maintaining portion, and
    the plurality of grooves are formed along the inner peripheral surface of the gap maintaining portion.

14. The lens assembly of claim 13, wherein the plurality of grooves are disposed side by side in the optical axis direction.

15. The lens assembly of claim 12, wherein the gap maintaining portion comprises a hole extending in an optical axis direction and forming an inner peripheral surface of the gap maintaining portion,

    a longitudinal direction of the plurality of grooves is parallel to the optical axis direction, and
    the plurality of grooves are formed along the inner peripheral surface of the gap maintaining portion.

FIG. 1

FIG. 2

FIG. 3

FIG. 4

120

1223 1224 121

1212

122

FIG. 5

FIG. 6

FIG. 7

120

1233

121

1211

1234

FIG. 8

FIG. 9

FIG. 10

FIG. 11

**EUROPEAN SEARCH REPORT**

Application Number

EP 24 19 1769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/252964 A1 (KIM DAE SEOB [KR] ET AL) 11 August 2022 (2022-08-11) | 1,2,8-10 | INV.<br>G03B17/12 |
| Y | * abstract * | 3 | G02B7/02 |
| A | * figure 8 *<br>* paragraphs [0006], [0066] *<br>- - - - - | 4-6 | G03B30/00 |
| X | JP 2023 132501 A (MAXELL LTD) 22 September 2023 (2023-09-22) | 11 | |
| Y | * abstract * | 3 | |
| A | * figure 3 *<br>* paragraph [0001] *<br>- - - - - | 12-15 | |
| A | CN 111 679 536 A (NINGBO SUNNY AUTOMOTIVE OPTICAL TECH CO LTD) 18 September 2020 (2020-09-18)<br>* the whole document *<br>- - - - - | 1-15 | |
| A | WO 2019/181122 A1 (NIDEC COPAL CORP [JP]) 26 September 2019 (2019-09-26)<br>* the whole document *<br>- - - - - | 1-15 | |
| | | | **TECHNICAL FIELDS SEARCHED (IPC)** |
| A | US 10 609 262 B2 (LG INNOTEK CO LTD [KR]) 31 March 2020 (2020-03-31)<br>* the whole document *<br>- - - - - | 1-15 | G03B<br>G02B |

The present search report has been drawn up for all claims

| Place of search | Date of completion of the search | Examiner |
|---|---|---|
| Munich | 16 January 2025 | Seifter, Achim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 24 19 1769

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | Publication date | Patent family member(s) | Publication date |
|---|---|---|---|
| US 2022252964 A1 | 11-08-2022 | CN 114911021 A<br>CN 216848297 U<br>KR 20220115258 A<br>US 2022252964 A1 | 16-08-2022<br>28-06-2022<br>17-08-2022<br>11-08-2022 |
| JP 2023132501 A | 22-09-2023 | NONE | |
| CN 111679536 A | 18-09-2020 | NONE | |
| WO 2019181122 A1 | 26-09-2019 | CN 111868623 A<br>JP 2019168509 A<br>WO 2019181122 A1 | 30-10-2020<br>03-10-2019<br>26-09-2019 |
| US 10609262 B2 | 31-03-2020 | CN 107690594 A<br>US 2018176431 A1<br>US 2020204712 A1<br>WO 2016195403 A1 | 13-02-2018<br>21-06-2018<br>25-06-2020<br>08-12-2016 |

EPO FORM P0459

For more details about this annex : see Official Journal of the European Patent Office, No. 12/82

**EP 4 542 299 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230140732